# FASCICULE DE BREVET EUROPEEN

(11) **EP 3 801 892 B1**
(45) Date de publication et mention de la délivrance du brevet: **17.04.2024**
(21) Numéro de dépôt: 19723802.5
(22) Date de dépôt: 16.05.2019
(51) Int. Cl.: B01J 29/70, C01B 39/48

(54) **PROCEDE DE PREPARATION D'UNE ZEOLITHE DE TYPE STRUCTURAL AFX DE HAUTE PURETE AVEC UN STRUCTURANT ORGANIQUE AZOTE**
VERFAHREN ZUR HERSTELLUNG EINES HOCHREINEN AFX-STRUKTURZEOLITHS MIT EINEM STICKSTOFFHALTIGEN ORGANISCHEN STRUKTURIERUNGSMITTEL
METHOD FOR PREPARING A HIGH-PURITY AFX STRUCTURAL ZEOLITE WITH A NITROGEN-CONTAINING ORGANIC STRUCTURING AGENT

(30) Priorité: 24.05.2018 FR 1854383
(43) Date de publication de la demande: 14.04.2021
(73) Titulaire: IFP Energies nouvelles, 92852 Rueil-Malmaison Cedex (FR)
(72) Inventeur: MARTINEZ FRANCO, Raquel, 92852 RUEIL-MALMAISON CEDEX (FR); LLIDO, Eric, 92852 RUEIL-MALMAISON CEDEX (FR); BERTHOUT, David, 92852 RUEIL-MALMAISON CEDEX (FR); HARBUZARU, Bogdan, 92852 RUEIL-MALMAISON CEDEX (FR)
(74) Mandataire: IFP Energies nouvelles
(86) Numéro de dépôt international: PCT/EP2019/062556
(87) Numéro de publication internationale: WO 2019/224084

(56) Documents cités:
- WO-A1-2017/087385
- WO-A1-2017/202495
- MARTÍN NURIA ET AL: "Cage-based small-pore catalysts for NH3-SCR prepared by combining bulky organic structure directing agents with modified zeolites as reagents", APPLIED CATALYSIS B: ENVIRONMENTAL, ELSEVIER, AMSTERDAM, NL, vol. 217, 29 mai 2017 (2017-05-29), pages 125-136, XP085112832, ISSN: 0926-3373, DOI: 10.1016/J.APCATB.2017.05.082

## Description

### Domaine technique

La présente invention se rapporte à un nouveau procédé de préparation d'une zéolithe de type structural AFX. Ce nouveau procédé permet de réaliser la synthèse d'une zéolithe de type structural AFX par conversion/transformation sous conditions hydrothermales d'une zéolithe de type structural FAU. En particulier, ledit nouveau procédé permet de réaliser la synthèse d'une zéolithe de type structural AFX, à partir d'une zéolithe de type structural FAU utilisée comme source de silicium et d'aluminium et d'une molécule organique ou structurant spécifique comportant deux fonctions ammonium quaternaire, choisi parmi le 1,5-bis(méthylpiperidinium)pentane, le 1,6-bis(méthylpiperidinium)hexane ou le 1,7-bis(méthylpiperidinium)heptane sous sa forme dihydroxide. Ladite zéolithe de type structural AFX obtenue selon le procédé de l'invention trouve avantageusement son application en tant que catalyseur, adsorbant ou agent de séparation.

### Art antérieur

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.

Le groupe structural AFX comprend en particulier la zéolithe SSZ-16, et les solides apparentés dits zéotypes SAPO-56 et MEAPSO-56. La zéolithe de type structural AFX présente un système tridimensionnel de pores délimités par huit tétraèdres et formé par deux types de cages: gmelinite (cage GME) et une grande cage AFT (-8,3 x 13,0 Ǻ). De nombreuses méthodes de synthèse de zéolithes de type structural AFX, en particulier de la zéolithe SSZ-16, sont connues. La zéolithe SSZ-16 a été synthétisée en utilisant des espèces organiques azotées dérivées de composés 1,4-di (1-azoniabicyclo [2.2.2] octane) alcanes inférieurs (US. Patent No. 4,508,837). Chevron Research and Technology Company a préparé la zéolithe SSZ-16 en présence de cations DABCO-Cₙ-diquat, où DABCO représente le 1,4-diazabicyclo [2.2.2] octane et n est 3, 4 ou 5 (U.S. Patent No.5,194,235). S.B. Hong et al ont utilisés l'ion alkylammonium diquaternaire Et6-diquat-n, où Et6-diquat représente N',N'-bis-triethylpentanediammonium et n est 5, comme agents de la structure pour la synthèse de la zéolithe SSZ-16 (Micropor. Mesopor. Mat., 60 (2003) 237-249). On peut citer également l'utilisation des cations 1,3-bis(adamantyl)imidazolium comme agent structurant pour la préparation de zéolithe de type structural AFX (R.H.Archer et al. dans Microp. Mesopor. Mat., 130 (2010) 255-2265 ; Johnson Matthey Company WO2016077667A1). Inagaki Satoshi et al. (JP2016169139A) ont utilisé des cations divalents N,N,N',N'-tétraarquirubicyclo [2.2.2]oct-7-ene-2,3:05,6-dipyrrolidium substitutés avec des groupes alkyle pour préparer la zéolithe SSZ-16. Chevron U.S.A. (WO2017/200607 A1) propose de réaliser la synthèse d'une zéolithe SSZ-16 en utilisant les dications :1,1'-(1,4-cyclohexylenedimethylene)bis[1-methylpiperidinium],1,1'-(1,4-cyclohexylenedimethylene)bis[1-methylpyrrolidinium], 1,1'-(1,4-cyclohexylenedimethylene)bis[1-ethylpyrrolidinium]. H.-Y. Chen et al. (Johnson Matthey Company, US2018/0093897) ont utilisé un mélangé de cations contenant au moins le 1,3-bis(adamantyl)imidazolium et une amine neutre pour préparer la zéolithe JMZ-10 de type structural AFX en absence de cations alcalins. H.-Y. Chen et al. (Johnson Matthey Company, US2018/0093259) ont utilisé un mélange de cations contenant une molécule organique choisie parmis le 1,3-bis(adamantyl)imidazolium, le N,N-dimethyl-3,5-dimethylpiperidinium, le N,N-diethyl-cis 2,6-dimethylpiperidinium, le N,N,N-1-trimethyladamantylammonium, le N,N,N-dimethylethylcyclohexylammonium et au moins un cation de métal alcalino-terreux pour obtenir la zéolithe JMZ-7 de type structural AFX qui présente des sites Al proches par rapport à la zéolithe obtenue par une synthèse mettant en oeuvre des cations alcalins. WO 2017/202495 A1, exemple 9, décrit un procédé de préparation d'une zéolithe AFX de ratio molaire SiO₂/ Al₂O₃=17 comprenant du rhodium sous forme de métal encapsulé, à partir d'une zéolithe USY (ratio molaire SiO₂/Al₂O₃ de 5), une solution aqueuse de Rh(C₂H₂N₂)Cl₃*3H₂O, de silice colloïdale, d'aluminate de sodium et d'un structurant qui est le dihydroxyde de 1,6-bis,(méthylpiperidinium)hexane.

MARTÍN NURIA ET AL: "Cage-based small-pore catalysts for NH3-SCR prepared by combining bulky organic structure directing agents with modified zeolites as reagents",APPLIED CATALYSIS B: ENVIRONMENTAL, ELSEVIER, vol. 217, 29 mai 2017, pages 125-136, décrit une méthode de préparation d'un catalyseur à base de zéolithe AFX, comprenant une étape de préparation d'un mélange aqueux à partir d'une zéolithe FAU (CBV712, ratio molaire SiO₂/Al₂O₃= 12), de la soude, et un composé organique azoté étant un dérivé diquaternaire du dimethylpyrrolidinium.

WO 2017/087385 A1 divulgue un procédé de préparation d'une zéolithe de type structural AFX (SSZ-16, de rapport Si/AI = 4,7) comprenant au moins la préparation d'un mélange aqueux à partir de silice colloïdale, de l'aluminate de sodium, de la soude, du dihydroxyde de 1,5-bis(méthylpiperidinium)pentane.

### Description de l'invention

### Résumé de l'invention

L'invention concerne un procédé de préparation d'une zéolithe de type structural AFX comprenant au moins les étapes suivantes :
i) le mélange en milieu aqueux, d'une zéolithe de type structural FAU ayant un ratio molaire SiO_{2 (FAU)}/Al₂O_{3 (FAU)} compris entre 2,00 (borne incluse) et 6,00 (borne exclue), d'un composé organique azoté R, R étant choisi parmi le dihydroxyde de 1,5-bis(méthylpiperidinium)pentane, le dihydroxyde de 1,6-bis(méthylpiperidinium)hexane ou le dihydroxyde de 1,7-bis(méthylpiperidinium)heptane, d'au moins une source d'au moins un métal alcalin et/ou alcalino-terreux M de valence n, n étant un entier supérieur ou égal à 1, M étant le sodium et la source d'au moins un métal alcalin et/ou alcalino- terreux M est l'hydroxyde de sodium, en présence ou non, d'un apport supplémentaire, au sein dudit mélange, d'au moins une source d'au moins un élément tétravalent XO₂, et/ou d'au moins une source d'au moins un élément trivalent Y₂O₃,
   le mélange réactionnel présentant la composition molaire suivante : (SiO_{2 (FAU)})/(Al₂O_{3 (FAU})) compris entre 2,00 (borne incluse) et 6,00 (borne exclue), de préférence entre 3,00 (borne incluse) et 6,00 (borne exclue), H₂O/(SiO_{2 (FAU)}) compris entre 1 et 100, de préférence entre 5 et 60, R/(SiO_{2 (FAU)}) compris entre 0,01 à 0,6, de préférence entre 0,05 et 0,5 M_{2/n}O/(SiO_{2 (FAU})) compris entre 0,005 à 0,7, de préférence entre 0,05 et 0,6 bornes incluses, dans laquelle SiO_{2 (FAU)} désigne la quantité de SiO₂ apportée par la zéolithe FAU, et Al₂O_{3 (FAU)} désigne la quantité de Al₂O₃ apportée par la zéolithe FAU, jusqu'à l'obtention d'un gel précurseur homogène présentant un ratio molaire de la quantité totale exprimée en oxydes d'éléments tétravalents sur la quantité totale exprimée en oxydes d'éléments trivalents compris entre 2 et 80;
ii) le traitement hydrothermal dudit gel précurseur obtenu à l'issue de l'étape i) à une température comprise entre 120°C et 220°C, pendant une durée comprise entre 12 heures et 15 jours.

De préférence, R est le dihydroxyde de 1,6-bis(méthylpiperidinium)hexane. Avantageusement, le rapport SiO₂/Al₂O₃ de la zéolithe obtenue est compris entre 4,00 et 100, de préférence entre 6,00 et 80, bornes incluses.

M est le sodium.

La source d'au moins un métal alcalin et/ou alcalino-terreux M est l'hydroxyde de sodium.

Le mélange réactionnel de l'étape i) peut comprendre au moins une source additionnelle d'un oxyde XO₂, X étant un ou plusieurs élément(s) tétravalent(s) choisi(s) dans le groupe formé par les éléments suivants : silicium, germanium, titane, de sorte que le ratio molaire XO₂/SiO_{2 (FAU)} soit compris entre 0,1 et 33, et de préférence entre 0,1 et 15, bornes incluses, la teneur en SiO_{2 (FAU)} dans ledit ratio étant la teneur apportée par la zéolithe de type structural FAU.

Le mélange réactionnel de l'étape i) a avantageusement la composition molaire suivante :
(XO₂ + SiO_{2 (FAU)})/Al₂O_{3 (FAU)} compris entre 2 et 200, de préférence entre 4 et 95
H₂O/(XO₂ + SiO_{2 (FAU)}) compris entre 1 et 100, de préférence entre 5 et 60
R/(XO₂ + SiO_{2 (FAU)}) compris entre 0,01 à 0,6, de préférence entre 0,05 et 0,5
M_{2/n}O/(XO₂ + SiO_{2 (FAU)}) compris entre 0,005 à 0,7, de préférence entre 0,05 et 0,6 bornes incluses.

De préférence, X est le silicium.

Le mélange réactionnel de l'étape i) peut comprendre au moins une source additionnelle d'un oxyde Y₂O₃, Y étant un ou plusieurs élément(s) trivalent(s) choisi(s) dans le groupe formé par les éléments suivants : aluminium, bore, gallium, de sorte que le ratio molaire Y₂O₃/Al₂O_{3 (FAU)} soit compris entre 0,001 et 2, et de préférence entre 0,001 et 1,8, bornes incluses, la teneur en Al₂O_{3 (FAU)} dans ledit ratio étant la teneur apportée par la zéolithe de type structural FAU.

Le mélange réactionnel de l'étape i) a avantageusement la composition molaire suivante :
SiO_{2 (FAU)}/(Al₂O_{3 (FAU)} + Y₂O₃) compris entre 2,00 (borne incluse) et 6,00 (borne exclue), de préférence entre 3,00 (borne incluse) et 6,00 (borne exclue)
H₂O/(SiO_{2 (FAU)}) compris entre 1 et 100, de préférence entre 5 et 60
R/(SiO_{2 (FAU)}) compris entre 0,01 à 0,6, de préférence entre 0,05 et 0,5
M_{2/n}O/(SiO_{2 (FAU)}) compris entre 0,005 à 0,7, de préférence entre 0,05 et 0,6 bornes incluses,
SiO_{2 (FAU)} étant la quantité de SiO₂ apportée par la zéolithe FAU, et Al₂O_{3 (FAU)} étant la quantité de Al₂O₃ apportée par la zéolithe FAU.

De préférence, Y est l'aluminium.

Dans un mode de réalisation, le mélange réactionnel de l'étape i) peut contenir:
- au moins une source additionnelle d'un oxyde XO₂
- et au moins une source additionnelle d'un oxyde Y₂O₃,
la zéolithe FAU représentant entre 5 et 95% massique, de préférence entre 50 et 95% massique, de manière très préférée entre 60 et 90% massique et de manière encore plus préférée entre 65 et 85% massique d'une zéolithe de type structural FAU par rapport à la quantité totale des sources des éléments trivalents et tétravalents SiO_{2 (FAU)}, XO₂, Al₂O_{3 (FAU)} et Y₂O₃ du mélange réactionnel, et le mélange réactionnel présentant la composition molaire suivante :
(XO₂ + SiO_{2 (FAU)})/(Al₂O_{3 (FAU)} + Y₂O₃) compris entre 2 et 200, de préférence entre 6 et 95
H₂O/(XO₂ + SiO_{2 (FAU)}) compris entre 1 et 100, de préférence entre 5 et 60
R/(XO₂ + SiO_{2 (FAU)}) compris entre 0,01 à 0,6, de préférence entre 0,05 et 0,5
M_{2/n}O/(XO₂ + SiO_{2 (FAU)}) compris entre 0,005 à 0,7, de préférence entre 0,05 et 0,6 bornes incluses,

Le gel précurseur obtenu à l'issue de l'étape i) présente un ratio molaire de la quantité totale exprimée en oxydes d'élément tétravalents sur la quantité totale exprimées en oxydes d'éléments trivalents compris entre 2 et 80, bornes incluses.

De préférence, la zéolithe de type structural FAU a un ratio molaire SiO_{2 (FAU)}/Al₂O_{3 (FAU)} compris entre 3,00 (borne incluse) et 6,00 (borne exclue), de manière très préférée un ratio molaire SiO_{2 (FAU)}/Al₂O_{3 (FAU)} compris entre 4,00 (borne incluse) et 6,00 (borne exclue).

On peut ajouter des germes cristallins d'une zéolithe de type structural AFX au mélange réactionnel de l'étape i), de préférence en quantité comprise entre 0,01 et 10% de la masse totale des sources desdits élément(s) tétravalent(s) et trivalent(s) sous forme anhydre présentes dans le mélange réactionnel, lesdits germes cristallins n'étant pas pris en compte dans la masse totale des sources des éléments tétravalents et trivalents.

L'étape i) peut comprendre une étape de mûrissement du mélange réactionnel à une température comprise entre 20 et 100°C, avec ou sans agitation, pendant une durée comprise entre 30 minutes et 48 heures.

Le traitement hydrothermal de l'étape ii) peut être réalisé sous pression autogène à une température comprise entre 120°C et 220°C, de préférence entre 150°C et 195°C, pendant une durée comprise entre 12 heures et 15 jours, de préférence entre 12 heures et 12 jours, de manière encore plus préférée entre 12 heures et 8 jours.

La phase solide obtenue à l'issue de l'étape ii) peut être filtrée, lavée, et séchée à une température comprise entre 20 et 150°C, de préférence entre 60 et 100°C, pendant une durée comprise entre 5 et 24 heures pour obtenir une zéolithe séchée.

La zéolithe séchée peut ensuite être calcinée à une température comprise entre 450 et 700°C pendant une durée comprise entre 2 et 20 heures, la calcination pouvant être précédée d'une montée en température progressive.

Le procédé précédemment décrit permet d'obtenir une zéolithe de type structural AFX de rapport SiO₂/Al₂O₃ compris entre 4,00 et 100, bornes incluses, de préférence calcinée et pour laquelle les valeurs moyennes des dₕₖₗ et intensités relatives mesurées sur un diagramme de diffraction de rayons X sont les suivantes :

| **2 thêta (°)** | **dhkl (Å)** | **Irel** | **2 thêta (°)** | **dhkl (Å)** | **Irel** |
|---|---|---|---|---|---|
| 7,49 | 11,79 | mf | 27,17 | 3,28 | ff |
| 8,73 | 10,12 | FF | 27,57 | 3,23 | ff |
| 11,72 | 7,55 | FF | 28,24 | 3,16 | mf |
| 12,98 | 6,82 | F | 28,68 | 3,11 | ff |
| 14,98 | 5,91 | ff | 30,29 | 2,95 | f |
| 15,66 | 5,66 | f | 30,57 | 2,92 | mf |
| 17,51 | 5,06 | mf | 31,19 | 2,87 | ff |
| 18,05 | 4,91 | m | 31,59 | 2,83 | mf |
| 19,62 | 4,52 | ff | 31,84 | 2,81 | ff |
| 19,88 | 4,46 | f | 32,74 | 2,73 | ff |
| 20,38 | 4,35 | F | 33,90 | 2,64 | f |
| 21,85 | 4,06 | FF | 34,28 | 2,61 | ff |
| 22,48 | 3,95 | f | 34,75 | 2,58 | f |
| 23,84 | 3,73 | f | 37,79 | 2,38 | ff |
| 26,11 | 3,41 | mf | 39,15 | 2,30 | ff |
| 27,08 | 3,29 | ff | 39,57 | 2,28 | ff |

où FF = très fort ; F = fort ; m = moyen ; mf = moyen faible ; f = faible ; ff = très faible. l'intensité relative Iᵣₑₗ étant donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85.

### Liste des figures

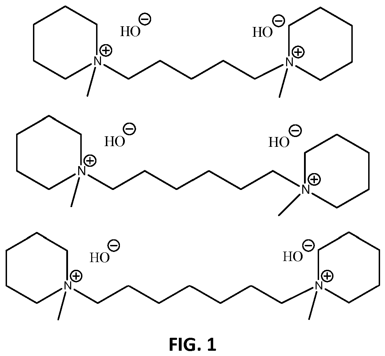

La Figure 1 représente les formules chimiques des composés organiques azotés qui peuvent être choisis comme structurant utilisé dans le procédé de synthèse selon l'invention.

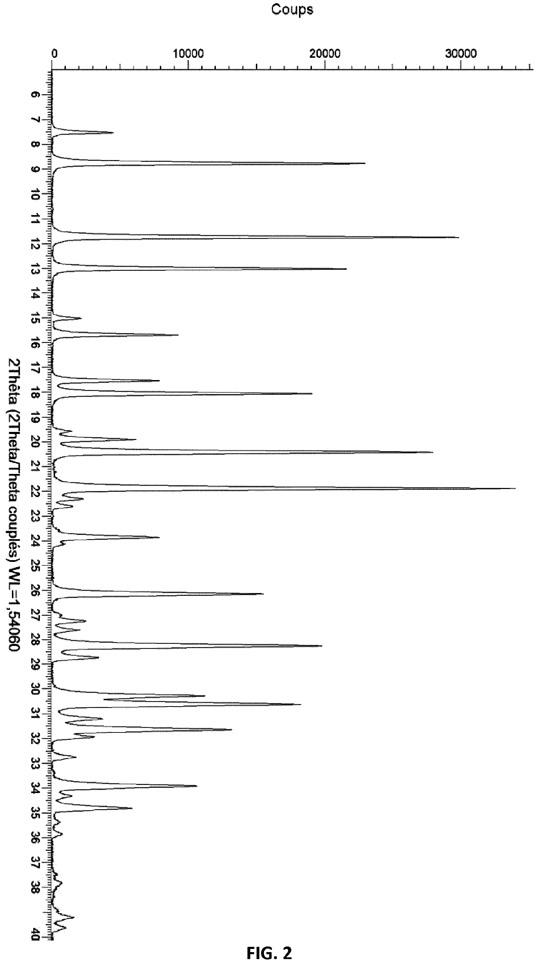

La Figure 2 représente le diagramme de diffraction X de la zéolithe AFX obtenue selon l'exemple 7.

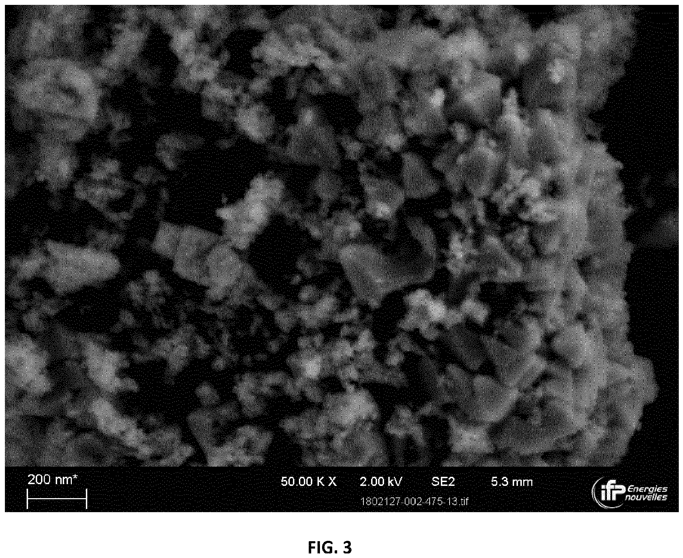

La Figure 3 représente un cliché au Microscope Electronique à Balayage (MEB) de la zéolithe AFX obtenue selon l'exemple 7.

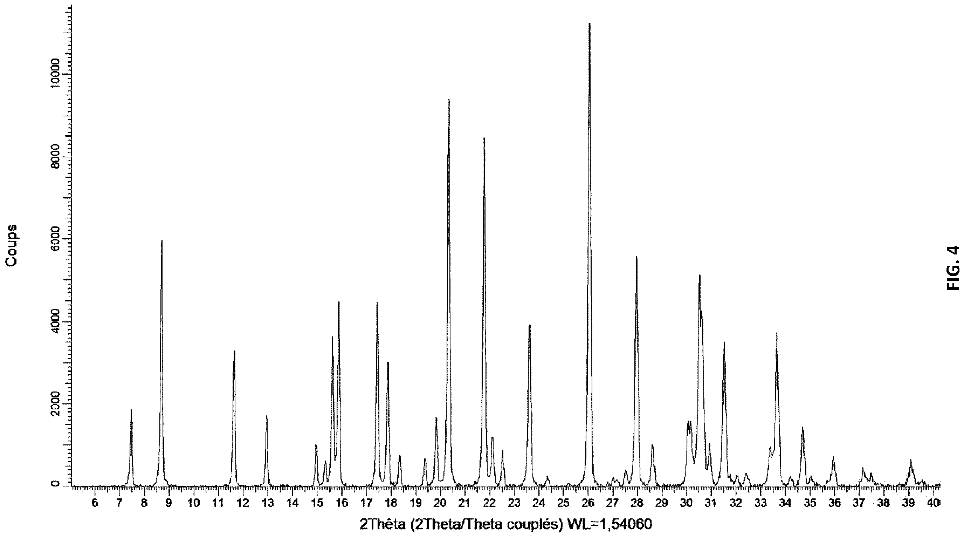

La Figure 4 représente le diagramme de diffraction X de la zéolithe AFX obtenue selon l'exemple 8 avec la zeolithe analcime (code structural ANA) comme impureté.

D'autres caractéristiques et avantages du procédé de synthèse selon l'invention, apparaîtront à la lecture de la description ci-après d'exemples non limitatifs de réalisations, en se référant aux figures annexées et décrites ci-après.

### Description détaillée de l'invention

La présente invention a pour objet un nouveau procédé de préparation d'une zéolithe de type structural AFX, par conversion/transformation sous conditions hydrothermales d'une zéolithe de type structural FAU de rapport SiO₂/Al₂O₃ particulier, en présence d'un composé organique azoté ou structurant spécifique choisi parmi les composés suivants 1,5-bis(méthylpiperidinium)pentane, 1,6-bis(méthylpiperidinium)hexane ou 1,7-bis(méthylpiperidinium)heptane sous sa forme dihydroxide.

En particulier, la demanderesse a découvert que le composé organique azoté ou structurant choisi parmi 1,5-bis(méthylpiperidinium)pentane, 1,6-bis (méthylpiperidinium)hexane ou 1,7-bis(méthylpiperidinium)heptane sous sa forme dihydroxyde, mis en mélange avec une zéolithe de type structural FAU ayant un ratio molaire SiO_{2 (FAU)}/Al₂O_{3 (FAU)} compris entre 2,00 (borne incluse) et 6,00 (borne exclue), utilisée comme source de silicium et d'aluminium, en présence ou non, d'un apport supplémentaire, au sein dudit mélange, d'au moins une source d'au moins un élément tétravalent XO₂, et/ou d'au moins une source d'au moins un élément trivalent Y₂O₃, conduit à la production d'un gel précurseur d'une zéolithe de type structural AFX présentant un ratio molaire de la quantité totale exprimée en oxydes d'éléments tétravalents sur la quantité totale exprimée en oxydes d'éléments trivalents compris entre 2 et 80, puis à la production d'une zéolithe de type structural AFX de haute pureté, la quantité totale en oxydes d'élément tétravalent représentant la somme de la teneur en SiO₂ provenant de la zéolithe FAU et de la teneur en XO₂ provenant de l'éventuelle source additionnelle d'un oxyde XO₂, dans le cas où un ajout d'au moins une source additionnelle d'un oxyde XO₂ est réalisé, la quantité totale en oxydes d'élément trivalent représentant la somme de la teneur en Al₂O₃ provenant de la zéolithe FAU et de la teneur en Y₂O₃ provenant de l'éventuelle source additionnelle d'un oxyde Y₂O₃, dans le cas où un ajout d'au moins une source additionnelle d'un oxyde Y₂O₃ est réalisé. Toute autre phase cristallisée ou amorphe est généralement et très préférentiellement absente du solide cristallisé constitué de la zéolithe de type structural AFX obtenue à l'issue du procédé de préparation.

La présente invention a plus précisément pour objet un nouveau procédé de préparation d'une zéolithe de type structural AFX comprenant au moins les étapes suivantes :
i) le mélange en milieu aqueux, d'une zéolithe de type structural FAU ayant un ratio molaire SiO2 (FAU)/Al2O3 (FAU) compris entre 2,00 (borne incluse) et 6,00 (borne exclue), d'un composé organique azoté R, R étant choisi parmi le dihydroxyde de 1,5-bis(méthylpiperidinium)pentane, le dihydroxyde de 1,6-bis(méthylpiperidinium)hexane ou le dihydroxyde de 1,7-bis(méthylpiperidinium)heptane, d'au moins une source d'au moins un métal alcalin et/ou alcalino-terreux M de valence n, n étant un entier supérieur ou égal à 1, M étant le sodium et la source d'au moins un métal alcalin et/ou alcalino- terreux M est l'hydroxyde de sodium, en présence ou non, d'un apport supplémentaire, au sein dudit mélange, d'au moins une source d'au moins un élément tétravalent XO2, et/ou d'au moins une source d'au moins un élément trivalent Y2O3, le mélange réactionnel présentant la composition molaire suivante : (SiO2 (FAU))/(Al2O3 (FAU)) compris entre 2,00 (borne incluse) et 6,00 (borne exclue), de préférence entre 3,00 (borne incluse) et 6,00 (borne exclue), H2O/ (SiO2 (FAU)) compris entre 1 et 100, de préférence entre 5 et 60, R/(SiO2 (FAU)) compris entre 0,01 à 0,6, de préférence entre 0,05 et 0,5 M2/nO/(SiO2 (FAU)) compris entre 0,005 à 0,7, de préférence entre 0,05 et 0,6 bornes incluses, dans laquelle SiO2 (FAU) désigne la quantité de SiO2 apportée par la zéolithe FAU, et Al2O3 (FAU) désigne la quantité de Al2O3 apportée par la zéolithe FAU, jusqu'à l'obtention d'un gel précurseur homogène présentant un ratio molaire de la quantité totale exprimée en oxydes d'éléments tétravalents sur la quantité totale exprimée en oxydes d'éléments trivalents compris entre 2 et 80;
ii) le traitement hydrothermal dudit gel précurseur obtenu à l'issue de l'étape i) à une température comprise entre 120°C et 220°C pendant une durée comprise entre 12 heures et 15 jours, jusqu'à ce que ladite zéolithe de type structural AFX se forme.

Un avantage de la présente invention est donc de fournir un nouveau procédé de préparation permettant la formation d'une zéolithe de type structural AFX de haute pureté à partir d'une zéolithe de type structural FAU, ledit procédé étant mis en oeuvre en présence d'un structurant organique spécifique choisi parmi le dihydroxyde de 1,5-bis(méthylpiperidinium)pentane, le dihydroxyde de 1,6-bis (méthylpiperidinium)hexane ou le dihydroxyde de 1,7-bis(méthylpiperidinium)heptane.

La zéolithe de type structural FAU de départ ayant un ratio molaire SiO₂/Al₂O₃ compris entre 2,00 (borne incluse) et 6,00 (borne exclue), peut être obtenue par n'importe quelle méthode connue par l'homme du métier et peut être utilisée dans sa forme sodique ou toute autre forme, après échange partiel ou total des cations sodium avec des cations ammonium, suivi ou non d'une étape de calcination. On peut citer, parmi les sources de FAU avec un rapport SiO₂/Al₂O₃ compris entre 2,00 (borne incluse) et 6,00 (borne exclue), les zéolithes commerciales CBV100, CBV300, CBV400, CBV500 et CBV600 produites par Zeolyst, les zéolithes commerciales HSZ-320NAA, HSZ-320HOA et HSZ-320HUA produites par TOSOH.

Le procédé de préparation selon l'invention permet donc d'ajuster le ratio SiO₂/Al₂O₃ du gel précurseur contenant une zéolithe de type structural FAU en fonction de l'apport supplémentaire ou pas, au sein du mélange réactionnel d'au moins une source d'au moins un élément tétravalent XO₂ et/ou d'au moins une source d'au moins un élément trivalent Y₂O₃.

Un autre avantage de la présente invention est de permettre la préparation d'un gel précurseur d'une zéolithe de type structural AFX présentant un ratio molaire SiO₂/Al₂O₃ identique, supérieur ou inférieur au ratio molaire SiO_{2 (FAU)}/Al₂O_{3 (FAU)} de la zéolithe de type structural FAU de départ.

Dans la composition molaire du mélange réactionnel de l'étape i) et dans l'ensemble de la description :
XO₂ désigne la quantité molaire du ou des élément(s) tétravalent(s) additionnels, exprimée sous forme oxyde, et Y₂O₃ désigne la quantité molaire du ou des élément(s) trivalent(s) additionnels, exprimée sous forme oxyde,
SiO_{2 (FAU)} désigne la quantité de SiO₂ apportée par la zéolithe FAU, et Al₂O_{3 (FAU)} désigne la quantité de Al₂O₃ apportée par la zéolithe FAU
H₂O la quantité molaire d'eau présente dans le mélange réactionnel,
R la quantité molaire dudit composé organique azoté,
M_{2/n}O la quantité molaire exprimée sous forme oxyde de M_{2/n}O apportée par la source de métal alcalin et/ou de métal alcalino-terreux.

L'étape i) comprend le mélange en milieu aqueux, d'une zéolithe de type structural FAU ayant un ratio molaire SiO_{2 (FAU)}/Al₂O_{3 (FAU)} compris entre 2,00 (borne incluse) et 6,00 (borne exclue), d'un composé organique azoté R, R étant le dihydroxyde de 1,5-bis(méthylpiperidinium)pentane, le dihydroxyde de 1,6-bis(méthylpiperidinium)hexane, ou le dihydroxyde de 1,7-bis(méthylpiperidinium)heptane, au moins un métal alcalin et/ou un métal alcalino-terreux M de valence n, n étant un entier supérieur ou égal à 1, le mélange réactionnel présentant la composition molaire suivante :
(SiO_{2 (FAU)})/(Al₂O_{3 (FAU)}) compris entre 2,00 (borne incluse) et 6,00 (borne exclue), de préférence compris entre 3,00 (borne incluse) et 6,00 (borne exclue),
H₂O/(SiO_{2 (FAU)}) compris entre 1 et 100, de préférence entre 5 et 60
R/(SiO_{2 (FAU)}) compris entre 0,01 à 0,6, de préférence entre 0,05 et 0,5
M_{2/n}O/(SiO_{2 (FAU)}) compris entre 0,005 à 0,7, de préférence entre 0,05 et 0,6
dans laquelle SiO_{2 (FAU)} est la quantité de SiO₂ apportée par la zéolithe FAU, et Al₂O_{3 (FAU)} est la quantité de Al₂O₃ apportée par la zéolithe FAU, H₂O la quantité molaire d'eau présente dans le mélange réactionnel, R la quantité molaire dudit composé organique azoté, M_{2/n}O la quantité molaire exprimée sous forme oxyde de M_{2/n}O apportée par la source de métal alcalin et/ou de métal alcalino-terreux et M est le sodium.

Dans un mode de réalisation préféré, le mélange réactionnel de l'étape i) comprend également au moins une source additionnelle d'un oxyde XO₂ de sorte que le ratio molaire XO₂/SiO_{2 (FAU)} soit compris entre 0,1 et 33, le mélange présentant avantageusement la composition molaire suivante :
(XO₂ + SiO_{2 (FAU)})/Al₂O_{3 (FAU)} compris entre 2 et 200, de préférence entre 4 et 95
H₂O/(XO₂ + SiO_{2 (FAU)}) compris entre 1 et 100, de préférence entre 5 et 60
R/(XO₂ + SiO_{2 (FAU)}) compris entre 0,01 à 0,6, de préférence entre 0,05 et 0,5
M_{2/n}O/(XO₂ + SiO_{2 (FAU)}) compris entre 0,005 à 0,7, de préférence entre 0,05 et 0,6 dans laquelle X est un ou plusieurs élément(s) tétravalent(s) choisi(s) dans le groupe formé par les éléments suivants : silicium, germanium, titane, de préférence X est le silicium, SiO_{2 (FAU)} étant la quantité de SiO₂ apportée par la zéolithe FAU, et Al₂O_{3 (FAU)} étant la quantité de Al₂O₃ apportée par la zéolithe FAU, R étant le dihydroxyde de 1,5-bis(méthylpiperidinium)pentane, le dihydroxyde de 1,6-bis(méthylpiperidinium)hexane ou le dihydroxyde de 1,7-bis(méthylpiperidinium)heptane, et M étant le sodium.

Dans un autre mode de réalisation préféré, le mélange réactionnel de l'étape i) comprend également au moins une source additionnelle d'un oxyde Y₂O₃ de sorte que le ratio molaire Y₂O₃/Al₂O_{3 (FAU)} soit compris entre 0,001 et 2, le mélange présentant avantageusement la composition molaire suivante :
SiO_{2 (FAU)}/(Al₂O_{3 (FAU)} + Y₂O₃) compris entre 2,00 (borne incluse) et 6,00 (borne exclue), de préférence compris entre 3,00 (borne incluse) et 6,00 (borne exclue),
H₂O/(SiO_{2 (FAU)}) compris entre 1 et 100, de préférence entre 5 et 60
R/(SiO_{2 (FAU)}) compris entre 0,01 à 0,6, de préférence entre 0,05 et 0,5
M_{2/n}O/(SiO_{2 (FAU)}) compris entre 0,005 à 0,7, de préférence entre 0,05 et 0,6
dans laquelle Y est un ou plusieurs élément(s) trivalent(s) choisi(s) dans le groupe formé par les éléments suivants : aluminium, bore, gallium, de préférence Y est l'aluminium, SiO_{2 (FAU)} étant la quantité de SiO₂ apportée par la zéolithe FAU, et Al₂O_{3 (FAU)} étant la quantité de Al₂O₃ apportée par la zéolithe FAU, R étant le dihydroxyde de 1,5-bis(méthylpiperidinium)pentane, le dihydroxyde de 1,6-bis(méthylpiperidinium)hexane ou le dihydroxyde de 1,7-bis(méthylpiperidinium)heptane, et M étant le sodium.

Dans un autre mode de réalisation préféré, le mélange réactionnel de l'étape i) contient un pourcentage entre 5 et 95% massique, de préférence entre 50 et 95% massique, de manière très préférée entre 60 et 90% massique et de manière encore plus préférée entre 65 et 85% massique d'une zéolithe de type structural FAU par rapport à la quantité totale des sources des éléments trivalents et tétravalents SiO_{2 (FAU)}, XO₂, Al₂O_{3 (FAU)} et Y₂O₃ du mélange réactionnel et comprend également au moins une source additionnelle d'un oxyde XO₂ et au moins une source additionnelle d'un oxyde Y₂O₃, le mélange réactionnel présentant la composition molaire suivante :
(XO₂ + SiO_{2 (FAU)})/(Al₂O_{3 (FAU)} + Y₂O₃) compris entre 2,00 et 200, de préférence entre 4,00 et 95
H₂O/(XO₂ + SiO_{2 (FAU)}) compris entre 1 et 100, de préférence entre 5 et 60
R/(XO₂ + SiO_{2 (FAU)}) compris entre 0,01 à 0,6, de préférence entre 0,05 et 0,5
M_{2/n}O/(XO₂ + SiO_{2 (FAU)}) compris entre 0,005 à 0,7, de préférence entre 0,05 et 0,6
dans laquelle X est un ou plusieurs élément(s) tétravalent(s) choisi(s) dans le groupe formé par les éléments suivants : silicium, germanium, titane, de préférence X est le silicium, Y est un ou plusieurs élément(s) trivalent(s) choisi(s) dans le groupe formé par les éléments suivants : aluminium, bore, gallium, de préférence le aluminium, SiO_{2 (FAU)} étant la quantité de SiO₂ apportée par la zéolithe FAU, et Al₂O_{3 (FAU)} étant la quantité de Al₂O₃ apportée par la zéolithe FAU, R étant le dihydroxyde de 1,5-bis(méthylpiperidinium)pentane, le dihydroxyde de 1,6-bis(méthylpiperidinium)hexane ou le dihydroxyde de 1,7-bis(méthylpiperidinium) heptane, et M étant le sodium.

L'étape i) permet l'obtention d'un gel précurseur homogène.

L'étape ii) comprend un traitement hydrothermal dudit gel précurseur obtenu à l'issue de l'étape i) qui est effectué à une température comprise entre 120°C et 220°C pendant une durée comprise entre 12 heures et 15 jours, jusqu'à ce que ladite zéolithe de type structural AFX cristallise.

Conformément à l'invention, une zéolithe de type structural FAU ayant un ratio molaire SiO_{2 (FAU)}/Al₂O_{3 (FAU)} compris entre 2,00 (borne inférieure incluse) et 6,00 (borne supérieure exclue), de préférence compris entre 3,00 (borne inférieure incluse) et 6,00 (borne supérieure exclue), et de manière très préférée compris entre 4,00 (borne inférieure incluse) et 6,00 (borne supérieure exclue), est incorporée dans le mélange réactionnel pour la mise en oeuvre de l'étape (i) comme source d'élément silicium et aluminium.

Conformément à l'invention, R est un composé organique azoté choisi parmi le dihydroxyde de 1,5-bis(méthylpiperidinium)pentane, le dihydroxyde de 1,6-bis(méthylpiperidinium)hexane ou le dihydroxyde de 1,7-bis(méthylpiperidinium)heptane, ledit composé étant incorporé dans le mélange réactionnel pour la mise en oeuvre de l'étape (i), comme structurant organique. L'anion associé aux cations ammoniums quaternaires présents dans l'espèce organique structurante pour la synthèse d'une zéolithe de type structural AFX selon l'invention est l'anion hydroxyde.

Conformément à l'invention, au moins une source d'au moins un métal alcalin et/ou alcalino-terreux M de valence n, est mise en oeuvre dans le mélange réactionnel de l'étape i), n étant un entier supérieur ou égal à 1, M étant le sodium. La source d'au moins un métal alcalin et/ou alcalino-terreux M est l'hydroxyde de sodium.

Conformément à l'invention, au moins une source additionnelle d'un oxyde XO₂, X étant un ou plusieurs élément(s) tétravalent(s) choisi(s) dans le groupe formé par les éléments suivants : silicium, germanium, titane, et de préférence X est le silicium, de sorte que le ratio molaire XO₂/SiO_{2 (FAU)} soit compris entre 0,1 et 33, et de préférence entre 0,1 et 15, la teneur en SiO_{2 (FAU)} dans ledit ratio étant la teneur apportée par la zéolithe de type structural FAU, est avantageusement mise en oeuvre dans le mélange réactionnel de l'étape i).

L'ajout d'au moins une source additionnelle d'un oxyde XO₂ permet notamment d'ajuster le ratio XO₂/Y₂O₃ du gel précurseur d'une zéolithe de type structural AFX obtenu à l'issue de l'étape i).

La ou les source(s) du(es)dit(s) élément(s) tétravalent(s) peu(ven)t être tout composé comprenant l'élément X et pouvant libérer cet élément en solution aqueuse sous forme réactive.

Lorsque X est le titane, on utilise avantageusement Ti(EtO)₄ comme source de titane. Dans le cas préféré où X est le silicium, la source de silicium peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SIL" ou du "Aerosil" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le Aerosil.

Conformément à l'invention, au moins une source additionnelle d'un oxyde Y₂O₃, Y étant un ou plusieurs élément(s) trivalent(s) choisi(s) dans le groupe formé par les éléments suivants : aluminium, bore, gallium, est avantageusement mise en oeuvre dans le mélange de l'étape i). De préférence Y est l'aluminium, de sorte que le ratio molaire Y₂O₃/Al₂O_{3 (FAU)} soit compris entre 0,001 et 2, et de préférence entre 0,001 et 1,8, la teneur en Al₂O_{3 (FAU)} dans ledit ratio étant la teneur apportée par la zéolithe de type structural FAU.

L'ajout d'au moins une source additionnelle d'un oxyde Y₂O₃ permet donc d'ajuster le ratio XO₂/Y₂O₃ du gel précurseur d'une zéolithe de type structural AFX obtenu à l'issue de l'étape i).

La ou les source(s) du(es)dit(s) élément(s) trivalent(s) Y peu(ven)t être tout composé comprenant l'élément Y et pouvant libérer cet élément en solution aqueuse sous forme réactive. L'élément Y peut être incorporé dans le mélange sous une forme oxydée YO_{b} avec 1 ≤ b ≤ 3 (b étant un nombre entier ou un nombre rationnel) ou sous toute autre forme. Dans le cas préféré où Y est l'aluminium, la source d'aluminium est de préférence de l'hydroxyde d'aluminium ou un sel d'aluminium, par exemple du chlorure, du nitrate, ou du sulfate, un aluminate de sodium, un alkoxyde d'aluminium, ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

L'étape (i) du procédé selon l'invention consiste à préparer un mélange réactionnel aqueux contenant une zéolithe de type structural FAU, éventuellement une source d'un oxyde XO₂ ou d'une source d'un oxyde Y₂O₃, au moins un composé organique azoté R, R étant choisi parmi le dihydroxyde de 1,5-bis(méthylpiperidinium)pentane, le dihydroxyde de 1,6-bis(méthylpiperidinium)hexane ou le dihydroxyde de 1,7-bis(méthylpiperidinium)heptane en présence d'au moins une source d'un ou plusieurs métal(aux) alcalin(s) et/ou alcalino-terreux M, M étant le sodium et la source d'au moins un métal alcalin et/ou alcalino- terreux M étant l'hydroxyde de sodium, pour obtenir un gel précurseur d'une zéolithe de type structural AFX. Les quantités desdits réactifs sont ajustées comme indiqué précédemment de manière à conférer à ce gel une composition permettant la cristallisation d'une zéolithe de type structural AFX.

Il peut être avantageux d'additionner des germes d'une zéolithe de type structural AFX au mélange réactionnel au cours de ladite étape i) du procédé de l'invention afin de réduire le temps nécessaire à la formation des cristaux d'une zéolithe de type structural AFX et/ou la durée totale de cristallisation. Lesdits germes cristallins favorisent également la formation de ladite zéolithe de type structural AFX au détriment d'impuretés. De tels germes comprennent des solides cristallisés, notamment des cristaux d'une zéolithe de type structural AFX. Les germes cristallins sont généralement ajoutés dans une proportion comprise entre 0,01 et 10% de la masse totale des sources desdits élément(s) tétravalent(s) et trivalent(s) sous forme anhydre présentes dans le mélange réactionnel, lesdits germes cristallins n'étant pas pris en compte dans la masse totale des sources des éléments tétravalents et trivalents. Lesdits germes ne sont pas non plus pris en compte pour déterminer la composition du mélange réactionnel et/ou du gel, définie plus avant, c'est-à-dire dans la détermination des différents rapports molaires de la composition du mélange réactionnel.

L'étape i) de mélange est mise en oeuvre jusqu'à obtention d'un mélange homogène, de préférence pendant une durée supérieure ou égale à 30 minutes, de préférence sous agitation par tout système connu de l'homme du métier à faible ou fort taux de cisaillement.

A l'issue de l'étape i) on obtient un gel précurseur homogène.

Il peut être avantageux de mettre en oeuvre un mûrissement du mélange réactionnel avant la cristallisation hydrothermale au cours de ladite étape i) du procédé de l'invention afin de contrôler la taille des cristaux d'une zéolithe de type structural AFX. Ledit mûrissement favorise également la formation de ladite zéolithe de type structural AFX au détriment d'impuretés. Le mûrissement du mélange réactionnel au cours de ladite étape i) du procédé de l'invention peut être réalisé à température ambiante ou à une température comprise entre 20 et 100°C avec ou sans agitation, pendant une durée avantageusement comprise entre 30 minutes et 48 heures.

Conformément à l'étape (ii) du procédé selon l'invention, le gel précurseur obtenu à l'issue de l'étape i) est soumis à un traitement hydrothermal, préférentiellement réalisé à une température comprise entre 120°C et 220°C pendant une durée comprise entre 12 heures et 15 jours, jusqu'à ce que ladite zéolithe de type structural AFX se forme.

Le gel précurseur est avantageusement mis sous conditions hydrothermales sous une pression de réaction autogène, éventuellement en ajoutant du gaz, par exemple de l'azote, à une température de préférence comprise entre 120°C et 220°C, de préférence entre 150°C et 195°C, jusqu'à la cristallisation complète d'une zéolithe de type structural AFX.

La durée nécessaire pour obtenir la cristallisation varie entre 12 heures et 15 jours, de préférence entre 12 heures et 12 jours, et de manière plus préférée entre 12 heures et 8 jours.

La mise en réaction s'effectue généralement sous agitation ou en absence d'agitation, de préférence sous agitation. Comme système d'agitation on peut utiliser tout système connu par l'homme de métier, par exemple, des pales inclinées avec des contrepales, des turbines d'agitation, des vis d'Archimède.

A la fin de la réaction, après mise en oeuvre de ladite étape ii) du procédé de préparation selon l'invention, la phase solide formée d'une zéolithe de type structural AFX est de préférence filtrée, lavée puis séchée. Le séchage est généralement réalisé à une température comprise entre 20 et 150°C, de préférence entre 60 et 100°C, pendant une durée comprise entre 5 et 24 heures.

La zéolithe séchée peut ensuite être avantageusement calcinée. La zéolithe de type structural AFX, calcinée, est généralement analysée par diffraction des rayons X, cette technique permettant également de déterminer la pureté de ladite zéolithe obtenue par le procédé de l'invention.

De manière très avantageuse, le procédé de l'invention conduit à la formation d'une zéolithe de type structural AFX exempte de toute autre phase cristallisée ou amorphe. La zéolithe AFX obtenue présente une pureté supérieure à 90%, d'une manière préférée supérieure à 95%, de manière très préférée supérieure à 97% et d'une manière encore plus préférée supérieure à 99,8%. Ladite zéolithe de type structural AFX, après l'étape de séchage, est ensuite prête pour des étapes ultérieures telles que la calcination et l'échange d'ions. Pour ces étapes, toutes les méthodes conventionnelles connues de l'homme du métier peuvent être employées.

La perte au feu de ladite zéolithe de type structural AFX obtenue après séchage et avant calcination est généralement comprise entre 5 et 15% poids. Selon l'invention, on entend par perte au feu (PAF) le pourcentage de perte de masse subie par un composé solide, un mélange de composés solides ou une pâte, de préférence dans le cas de la présente invention par ladite zéolithe AFX préparée, lors d'un traitement thermique à 1000°C pendant 2 heures, dans un four statique (type four à moufle), par rapport à la masse du composé solide, du mélange de composés solides ou de la pâte initial(e), de préférence dans le cas de la présente invention par rapport à la masse de zéolithe AFX séchée testée. La perte au feu correspond en général à la perte de solvant (tel que l'eau) contenu dans les solides, mais aussi à l'élimination de composés organiques contenus dans les constituants solides minéraux.

L'étape de calcination d'une zéolithe de type structural AFX obtenue selon le procédé de l'invention est préférentiellement réalisée à une température comprise entre 450 et 700°C pendant une durée comprise entre 2 et 20 heures.

La zéolithe de type structural AFX obtenue à l'issue de l'étape de calcination est dépourvue de toute espèce organique et en particulier du structurant organique R.

A l'issue de ladite étape de calcination, la diffraction des rayons X permet de vérifier que le solide obtenu par le procédé selon l'invention est bien une zéolithe de type structural AFX. La pureté obtenue est de préférence supérieure à 99,8%. Dans ce cas, le solide obtenu présente le diagramme de diffraction de rayons X incluant au moins les raies inscrites dans le Tableau 1. De préférence, le diagramme de diffraction X ne contient pas d'autres raies d'intensité significative (c'est-à-dire d'intensité supérieure à environ trois fois le bruit de fond) que celles inscrites dans le Tableau 1.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé de type structural AFX selon l'invention comporte au moins les raies aux valeurs de dₕₖₗ données dans le Tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,6Å et ± 0,01Å.

**Tableau 1 : Valeurs moyennes des dₕₖₗ et intensités relatives mesurées sur un diagramme de diffraction de rayons X du solide cristallisé de type structural AFX calciné**

| **2 thêta (°)** | **dhkl (Å)** | **Irel** | **2 thêta (°)** | **dhkl (Å)** | **Irel** |
|---|---|---|---|---|---|
| 7,49 | 11,79 | mf | 27,17 | 3,28 | ff |
| 8,73 | 10,12 | FF | 27,57 | 3,23 | ff |
| 11,72 | 7,55 | FF | 28,24 | 3,16 | mf |
| 12,98 | 6,82 | F | 28,68 | 3,11 | ff |
| 14,98 | 5,91 | ff | 30,29 | 2,95 | f |
| 15,66 | 5,66 | f | 30,57 | 2,92 | mf |
| 17,51 | 5,06 | mf | 31,19 | 2,87 | ff |
| 18,05 | 4,91 | m | 31,59 | 2,83 | mf |
| 19,62 | 4,52 | ff | 31,84 | 2,81 | ff |
| 19,88 | 4,46 | f | 32,74 | 2,73 | ff |
| 20,38 | 4,35 | F | 33,90 | 2,64 | f |
| 21,85 | 4,06 | FF | 34,28 | 2,61 | ff |
| 22,48 | 3,95 | f | 34,75 | 2,58 | f |
| 23,84 | 3,73 | f | 37,79 | 2,38 | ff |
| 26,11 | 3,41 | mf | 39,15 | 2,30 | ff |
| 27,08 | 3,29 | ff | 39,57 | 2,28 | ff |

où FF = très fort ; F = fort ; m = moyen ; mf = moyen faible ; f = faible ; ff = très faible. L'intensité relative Iᵣₑₗ est donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85.

La spectrométrie de fluorescence des rayons X (FX) est une technique d'analyse chimique utilisant une propriété physique de la matière, la fluorescence de rayons X. Elle permet l'analyse de la majorité des éléments chimiques a partir du Béryllium (Be) dans des gammes de concentration allant de quelques ppm à 100%, avec des résultats précis et reproductibles. On utilise les rayons X pour exciter les atomes qui sont dans l'échantillon, ce qui leur fait émettre des rayons X à énergie caractéristique de chaque élément présent. L'intensité et l'énergie de ces rayons X sont ensuite mesurées pour déterminer la concentration des éléments dans le matériau.

Il est également avantageux d'obtenir la forme protonée de la zéolithe de type structural AFX obtenue par le procédé selon l'invention. Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe de type structural AFX en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

La zéolithe de type structural AFX obtenue par le procédé de l'invention peut être utilisée après échange ionique comme solide acide pour la catalyse dans les domaines du raffinage et de la pétrochimie. Elle peut également être utilisée comme adsorbant ou comme tamis moléculaire.

### EXEMPLES

L'invention est illustrée par les exemples suivants qui ne présentent, en aucun cas, un caractère limitatif.

### Exemple 1: préparation du structurant organique dihydroxyde de 1,6-bis(méthvlpiperidinium)hexane (structurant R).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante puis filtré. Le mélange est versé dans 300 mL de diéthyléther froid puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).

Le produit possède le spectre RMN ¹H attendu. RMN ¹H (D₂O, ppm/TMS) : 1,27 (4H,m) ; 1,48 (4H,m) ; 1,61 (4H,m) ; 1,70 (8H,m) ; 2,85 (6H,s) ; 3,16 (12H,m). 18,9 g d'Ag₂O (0,08 mole, 99%, Aldrich) sont ajoutés dans un bécher en téflon de 250 ml contenant 30 g du structurant dibromure de 1,6-bis(méthylpiperidinium)hexane (0,07 mole) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

### Exemple 2: préparation d'une zéolithe de type structural AFX selon l'invention

25,72 g d'une solution aqueuse de dihydroxyde de 1,6-bis(méthylpiperidinium)hexane (21,56% en poids) préparé selon l'exemple 1 sont mélangés avec 46,46 g d'eau permutée, sous agitation et à température ambiante. 0,761 g d'hydroxyde de sodium (98% en poids, Aldrich) sont dissous dans le mélange précédent sous agitation et à température ambiante. On verse ensuite par petites fractions 4,44 g de silice Aerosil 380 (100% en poids, Degussa) sous agitation. Dès que la suspension obtenue est homogène on commence à verser 2,63 g de zéolithe de type structural FAU (CBV600 Zeolyst, SiO₂/Al₂O₃= 5,48, PAF = 12,65%) et on maintient sous agitation la suspension obtenue pendant 30 minutes, à température ambiante. Le rapport molaire (SiO₂(Aerosil)/SiO₂(FAU) est de 2,65. Le gel précurseur obtenu présente la composition molaire suivante: 1 SiO₂: 0,05 Al₂O₃: 0,167 R: 0,093 Na₂O: 36,73 H₂O, soit un ratio SiO₂/Al₂O₃ de 20. Le gel précurseur est ensuite transféré dans un réacteur inox de 160 mL doté d'un système d'agitation à 4 pales inclinées. Le réacteur est fermé puis chauffé pendant 34 heures à 170°C sous agitation à 100 tr/min. Le solide obtenu est filtré, lavé à l'eau déionisée, puis séché une nuit à 100°C. La perte au feu du solide séché est de 10,1%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures, puis un retour à la température ambiante.

Le produit solide calciné a été analysé par diffraction des rayons X et identifié comme étant constitué d'une zéolithe de type structural AFX de pureté supérieure à 99% poids.

### Exemple 3: préparation d'une zéolithe de type structural AFX selon l'invention

25,72 g d'une solution aqueuse de dihydroxyde de 1,6-bis(méthylpiperidinium)hexane (21,56% en poids) préparé selon l'exemple 1 sont mélangés avec 46,46 g d'eau permutée, sous agitation et à température ambiante. 0,761 g d'hydroxyde de sodium (98% en poids, Aldrich) sont dissous dans le mélange précédent sous agitation et à température ambiante. On verse ensuite par petites fractions 4,44 g de silice Aerosil 380 (100% en poids, Degussa) sous agitation. Dès que la suspension obtenue est homogène on commence à verser 2,63 g de zéolithe de type structural FAU (CBV600 Zeolyst, SiO₂/Al₂O₃= 5,48, PAF = 12,65%) et on maintient sous agitation la suspension obtenue pendant 30 minutes, à température ambiante. Le rapport molaire (SiO₂(Aerosil)/SiO₂(FAU) est de 2,65. Le gel précurseur obtenu présente la composition molaire suivante: 1 SiO₂: 0,05 Al₂O₃: 0,167 R: 0,093 Na₂O: 36,73 H₂O, soit un ratio SiO₂/Al₂O₃ de 20. Le gel précurseur est ensuite transféré dans un autoclave inox de 160 mL. L'autoclave est fermé, puis chauffé pendant 40 heures à 170°C sans agitation. Le solide obtenu est filtré, lavé à l'eau déionisée puis séché une nuit à 100°C. La perte au feu du solide séché est de 9,5%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivie d'un palier à 550°C maintenu durant 8 heures puis un retour à la température ambiante.

Le produit solide calciné a été analysé par diffraction des rayons X et identifié comme étant constitué d'une zéolithe de type structural AFX de pureté supérieure à 95% poids.

### Exemple 4: préparation d'une zéolithe de type structural AFX selon l'invention

19,62 g d'une solution aqueuse de dihydroxyde de 1,6-bis(méthylpiperidinium)hexane (21,56% en poids) préparé selon l'exemple 1 sont mélangés avec 52,4 g d'eau permutée, sous agitation et à température ambiante. 0,774 g d'hydroxyde de sodium (98% en poids, Aldrich) sont dissous dans le mélange précédent sous agitation et à température ambiante. On verse ensuite par petites fractions 4,52 g de silice Aerosil 380 (100% en poids, Degussa) sous agitation. Dès que la suspension obtenue est homogène, on commence à verser 2,67 g de zéolithe de type structural FAU (CBV600 Zeolyst, SiO₂/Al₂O₃= 5,48, PAF = 12,65%) et on maintient sous agitation la suspension obtenue pendant 30 minutes, à température ambiante. Le rapport molaire (SiO₂(Aerosil)/SiO₂(FAU) est de 2,65. Le gel précurseur obtenu présente la composition molaire suivante: 1 SiO₂: 0,05 Al₂O₃: 0,125 R: 0,093 Na₂O: 36,73 H₂O, soit un ratio SiO₂/Al₂O₃ de 20. Le gel précurseur est ensuite transféré dans un réacteur inox de 160 mL doté d'un système d'agitation à 4 pales inclinées. Le réacteur est fermé puis chauffé pendant 30 heures à 170°C sous agitation à 100 tr/min. Le solide obtenu est filtré, lavé à l'eau déionisée puis séché une nuit à 100°C. La perte au feu du solide séché est de 9,5%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe de type structural AFX de pureté supérieure à 95% poids.

### Exemple 5: préparation d'une zéolithe de type structural AFX selon l'invention

29,25 g d'une solution aqueuse de dihydroxyde de 1,6-bis(méthylpiperidinium)hexane (21,56% en poids) préparé selon l'exemple 1 sont mélangés avec 42,74 g d'eau permutée, sous agitation et à température ambiante. 0,760 g d'hydroxyde de sodium (98% en poids, Aldrich) sont dissous dans le mélange précédent sous agitation et à température ambiante. On verse ensuite par petites fractions 4,10 g de silice Aerosil 380 (100% en poids, Degussa) sous agitation. Dès que la suspension obtenue est homogène on commence à verser 3,15 g de zéolithe de type structural FAU (CBV600 Zeolyst, SiO₂/Al₂O₃= 5,48, PAF = 12,65%) et on maintient sous agitation la suspension obtenue pendant 30 minutes, à température ambiante. Le rapport molaire (SiO₂(Aerosil)/SiO₂(FAU) est de 2,04. Le gel précurseur obtenu présente la composition molaire suivante: 1 SiO₂: 0,06 Al₂O₃: 0,167 R: 0,093 Na₂O: 36,73 H₂O, soit un ratio SiO₂/Al₂O₃ de 16,67. Le gel précurseur est ensuite transféré dans un réacteur inox de 160 mL doté d'un système d'agitation à 4 pales inclinées. Le réacteur est fermé, puis chauffé pendant 40 heures à 170°C sous agitation à 100 tr/min. Le solide obtenu est filtré, lavé à l'eau déionisée puis séché une nuit à 100°C. La perte au feu du solide séché est de 9,6%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe de type structural AFX de pureté supérieure à 99,8% poids.

### Exemple 6: préparation d'une zéolithe de type structural AFX selon l'invention

24,97 g d'une solution aqueuse de dihydroxyde de 1,6-bis(méthylpiperidinium)hexane (21,56% en poids) préparé selon l'exemple 1 sont mélangés avec 44,9 g d'eau permutée, sous agitation et à température ambiante. 0,980 g d'hydroxyde de sodium (98% en poids, Aldrich) sont dissous dans le mélange précédent sous agitation et à température ambiante. On verse ensuite par petites fractions 5,75 g de silice Aerosil 380 (100% en poids, Degussa) sous agitation. Dès que la suspension obtenue est homogène on commence à verser 3,40 g de zéolithe de type structural FAU (CBV600 Zeolyst, SiO₂/Al₂O₃= 5,48, PAF = 12,65%) et on maintient sous agitation la suspension obtenue pendant 30 minutes, à température ambiante. Le rapport molaire (SiO₂(Aerosil)/SiO₂(FAU) de 2,65. Le gel précurseur obtenu présente la composition molaire suivante: 1 SiO₂: 0,05 Al₂O₃: 0,125 R: 0,093 Na₂O: 27,55 H₂O, soit un ratio SiO₂/Al₂O₃ de 20. Le gel précurseur est ensuite transféré dans un réacteur inox de 160 mL doté d'un système d'agitation à 4 pales inclinées. Le réacteur est fermé puis chauffé pendant 22 heures à 170°C sous agitation à 100 tr/min. Le solide obtenu est filtré, lavé à l'eau déionisée puis séché une nuit à 100°C. La perte au feu du solide séché est de 9,5%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe de type structural AFX de pureté supérieure à 95% poids.

### Exemple 7: préparation d'une zéolithe de type structural AFX selon l'invention

19,62 g d'une solution aqueuse de dihydroxyde de 1,6-bis(méthylpiperidinium)hexane (21,56% en poids) préparé selon l'exemple 1 sont mélangés avec 52,4 g d'eau permutée, sous agitation et à température ambiante. 0,774 g d'hydroxyde de sodium (98% en poids, Aldrich) sont dissous dans le mélange précédent sous agitation et à température ambiante. On verse ensuite par petites fractions 4,52 g de silice Aerosil 380 (100% en poids, Degussa) sous agitation. Dès que la suspension obtenue est homogène on commence à verser 2,67 g de zéolithe de type structural FAU (CBV600 Zeolyst, SiO₂/Al₂O₃= 5,48, PAF = 12,65%) et on maintien sous agitation la suspension obtenue pendant 30 minutes, à température ambiante. Le rapport molaire (SiO₂(Aerosil)/SiO₂(FAU) de 2,65. Le gel précurseur obtenu présente la composition molaire suivante: 1 SiO₂: 0,05 Al₂O₃: 0,125 R : 0,093 Na₂O: 36,73 H₂O, soit un ratio SiO₂/Al₂O₃ de 20. Dans le gel précurseur sont introduits sous agitation 0,6 g de germes de zéolithe de type structural AFX (provenant de l'exemple 5, (8,7% par rapport à la masse de zéolithe CBV600 anhydre et de silice Aerosil 380). Ensuite le gel précurseur contenant les germes de zéolithe AFX est transféré dans un réacteur inox de 160 mL doté d'un système d'agitation à 4 pales inclinées. Le réacteur est fermé puis chauffé pendant 14 heures à 170°C sous agitation à 100 tr/min. Le solide obtenu est filtré, lavé à l'eau déionisée puis séché une nuit à 100°C. La perte au feu du solide séché est de 9,6%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe de type structural AFX de pureté supérieure à 97% poids.

### Exemple 8: préparation d'une zéolithe de type structural AFX selon l'invention

25,72 g d'une solution aqueuse de dihydroxyde de 1,6-bis(méthylpiperidinium)hexane (21,56% en poids) préparé selon l'exemple 1 sont mélangés avec 46,154 g d'eau permutée, sous agitation et à température ambiante. 0,761 g d'hydroxyde de sodium (98% en poids, Aldrich) sont dissous dans le mélange précédent sous agitation et à température ambiante. On verse ensuite par petites fractions 4,39 g de silice Aerosil 380 (100% en poids, Degussa) sous agitation. Dès que la suspension obtenue est homogène on commence à verser 2,98 g de zéolithe de type structural FAU (CBV500 Zeolyst, SiO₂/Al₂O₃= 5,65, PAF = 20,4%) et on maintient sous agitation la suspension obtenue pendant 30 minutes, à température ambiante. Le rapport molaire (SiO₂(Aerosil)/SiO₂(FAU) de 2,54. Le gel précurseur obtenu présente la composition molaire suivante: 1 SiO₂: 0,05 Al₂O₃: 0,167 R : 0,093 Na₂O: 36,73 H₂O, soit un ratio SiO₂/Al₂O₃ de 20. Le gel précurseur est ensuite transféré dans un réacteur inox de 160 mL doté d'un système d'agitation à 4 pales inclinées. Le réacteur est fermé, puis chauffé pendant 26 heures à 170°C sous agitation à 100 tr/min. Le solide obtenu est filtré, lavé à l'eau déionisée, puis séché une nuit à 100°C. La perte au feu du solide séché est de 9,5%. Le solide est ensuite introduit dans un four à moufle où est réalisée une étape de calcination : le cycle de calcination comprend une montée de 1,5°C/min en température jusqu'à 200°C, un palier à 200°C maintenu durant 2 heures, une montée de 1°C/min en température jusqu'à 550°C suivie d'un palier à 550°C maintenu durant 8 heures, puis un retour à la température ambiante.

Le produit solide calciné a été analysé par diffraction des rayons X et identifié comme étant constitué d'une zéolithe de type structural AFX de pureté supérieure à 90% poids, comprenant des traces (moins de 10% poids) de zéolithe analcime (ANA).

## Revendications

1. Procédé de préparation d'une zéolithe de type structural AFX comprenant au moins les étapes suivantes :
i) le mélange en milieu aqueux, d'une zéolithe de type structural FAU ayant un ratio molaire SiO_{2 (FAU)}/Al₂O_{3 (FAU)} compris entre 2,00 (borne incluse) et 6,00 (borne exclue), d'un composé organique azoté R, R étant choisi parmi le dihydroxyde de 1,5-bis(méthylpiperidinium)pentane, le dihydroxyde de 1,6-bis(méthylpiperidinium)hexane ou le dihydroxyde de 1,7-bis(méthylpiperidinium)heptane, d'au moins une source d'au moins un métal alcalin et/ou alcalino-terreux M de valence n, n étant un entier supérieur ou égal à 1, M étant le sodium et la source d'au moins un métal alcalin et/ou alcalino-terreux M est l'hydroxyde de sodium, en présence ou non, d'un apport supplémentaire, au sein dudit mélange, d'au moins une source d'au moins un élément tétravalent XO₂, et/ou d'au moins une source d'au moins un élément trivalent Y₂O₃,
le mélange réactionnel présentant la composition molaire suivante :
(SiO_{2 (FAU)})/(Al₂O_{3 (FAU)}) compris entre 2,00 (borne incluse) et 6,00 (borne exclue), de préférence entre 3,00 (borne incluse) et 6,00 (borne exclue) H₂O/(SiO_{2 (FAU)}) compris entre 1 et 100, de préférence entre 5 et 60 R/(SiO_{2 (FAU)}) compris entre 0,01 à 0,6, de préférence entre 0,05 et 0,5 M_{2/n}O/(SiO_{2 (FAU)}) compris entre 0,005 à 0,7, de préférence entre 0,05 et 0,6 bornes incluses,
dans laquelle SiO_{2 (FAU)} désigne la quantité de SiO₂ apportée par la zéolithe FAU, et Al₂O_{3 (FAU)} désigne la quantité de Al₂O₃ apportée par la zéolithe FAU, jusqu'à l'obtention d'un gel précurseur homogène présentant un ratio molaire de la quantité totale exprimée en oxydes d'éléments tétravalents sur la quantité totale exprimée en oxydes d'éléments trivalents compris entre 2 et 80;
ii) le traitement hydrothermal dudit gel précurseur obtenu à l'issue de l'étape i) à une température comprise entre 120°C et 220°C, pendant une durée comprise entre 12 heures et 15 jours.

2. Procédé selon la revendication précédente dans lequel R est le dihydroxyde de 1,6-bis(méthylpiperidinium)hexane.

3. Procédé selon l'une des revendications précédentes dans lequel le mélange réactionnel de l'étape i) comprend au moins une source additionnelle d'un oxyde XO₂, X étant un ou plusieurs élément(s) tétravalent(s) choisi(s) dans le groupe formé par les éléments suivants : silicium, germanium, titane, de sorte que le ratio molaire XO₂/SiO_{2 (FAU)} soit compris entre 0,1 et 33, et de préférence entre 0,1 et 15, bornes incluses, la teneur en SiO_{2 (FAU)} dans ledit ratio étant la teneur apportée par la zéolithe de type structural FAU.

4. Procédé selon la revendication 3 dans lequel le mélange réactionnel de l'étape i) a la composition molaire suivante :
(XO₂ + SiO_{2 (FAU)})/Al₂O_{3 (FAU)} compris entre 2 et 200, de préférence entre 4 et 95
H₂O/(XO₂ + SiO_{2 (FAU)}) compris entre 1 et 100, de préférence entre 5 et 60
R/(XO₂ + SiO_{2 (FAU)}) compris entre 0,01 à 0,6, de préférence entre 0,05 et 0,5
M_{2/n}O/(XO₂ + SiO_{2 (FAU)}) compris entre 0,005 à 0,7, de préférence entre 0,05 et 0,6 bornes incluses.

5. Procédé selon l'une des revendications 3 à 4 dans lequel X est le silicium.

6. Procédé selon l'une des revendications précédentes dans lequel le mélange réactionnel de l'étape i) comprend au moins une source additionnelle d'un oxyde Y₂O₃, Y étant un ou plusieurs élément(s) trivalent(s) choisi(s) dans le groupe formé par les éléments suivants : aluminium, bore, gallium, de sorte que le ratio molaire Y₂O₃/Al₂O_{3 (FAU)} soit compris entre 0,001 et 2, et de préférence entre 0,001 et 1,8, bornes incluses, la teneur en Al₂O_{3 (FAU)} dans ledit ratio étant la teneur apportée par la zéolithe de type structural FAU.

7. Procédé selon la revendication 6 dans lequel le mélange réactionnel de l'étape i) a la composition molaire suivante :
SiO_{2 (FAU)}/(Al₂O_{3 (FAU)} + Y₂O₃) compris entre 2,00 (borne incluse) et 6,00 (borne exclue), de préférence entre 3,00 (borne incluse) et 6,00 (borne exclue) H₂O/(SiO_{2 (FAU)}) compris entre 1 et 100, de préférence entre 5 et 60 R/(SiO_{2 (FAU)}) compris entre 0,01 à 0,6, de préférence entre 0,05 et 0,5 M_{2/n}O/(SiO_{2 (FAU)}) compris entre 0,005 à 0,7, de préférence entre 0,05 et 0,6 bornes incluses,
SiO_{2 (FAU)} étant la quantité de SiO₂ apportée par la zéolithe FAU, et Al₂O_{3 (FAU)} étant la quantité de Al₂O₃ apportée par la zéolithe FAU.

8. Procédé selon l'une des revendications 6 à 7 dans lequel Y est l'aluminium.

9. Procédé selon l'une des revendications précédentes dans lequel le mélange réactionnel de l'étape i) contient :
- au moins une source additionnelle d'un oxyde XO₂
- et au moins une source additionnelle d'un oxyde Y₂O₃,
la zéolithe FAU représentant entre 5 et 95% massique, de préférence entre 50 et 95% massique, de manière très préférée entre 60 et 90% massique et de manière encore plus préférée entre 65 et 85% massique d'une zéolithe de type structural FAU par rapport à la quantité totale des sources des éléments trivalents et tétravalents SiO_{2 (FAU)}, XO₂, Al₂O_{3 (FAU)} et Y₂O₃ du mélange réactionnel, et le mélange réactionnel présentant la composition molaire suivante :
(XO₂ + SiO_{2 (FAU)})/(Al₂O_{3 (FAU)} + Y₂O₃) compris entre 2 et 200, de préférence entre 6 et 95
H₂O/(XO₂ + SiO_{2 (FAU)}) compris entre 1 et 100, de préférence entre 5 et 60 R/(XO₂ + SiO_{2 (FAU)}) compris entre 0,01 à 0,6, de préférence entre 0,05 et 0,5 M_{2/n}O/(XO₂ + SiO_{2 (FAU)}) compris entre 0,005 à 0,7, de préférence entre 0,05 et 0,6
bornes incluses,

10. Procédé selon l'une des revendications précédentes dans lequel le gel précurseur obtenu à l'issue de l'étape i) présente un ratio molaire de la quantité totale exprimée en oxydes d'élément tétravalents sur la quantité totale exprimées en oxydes d'éléments trivalents compris entre 2 et 80, bornes incluses.

11. Procédé selon l'une des revendications précédentes dans lequel la zéolithe de type structural FAU a un ratio molaire SiO_{2 (FAU)}/Al₂O_{3 (FAU)} compris entre 3,00 (borne incluse) et 6,00 (borne exclue), de manière préférée un ratio molaire SiO_{2 (FAU)}/Al₂O_{3 (FAU)} compris entre 4,00 (borne incluse) et 6,00 (borne exclue).

12. Procédé selon l'une des revendications précédentes dans lequel on ajoute des germes cristallins d'une zéolithe de type structural AFX au mélange réactionnel de l'étape i), de préférence en quantité comprise entre 0,01 et 10% de la masse totale des sources desdits élément(s) tétravalent(s) et trivalent(s) sous forme anhydre présentes dans le mélange réactionnel, lesdits germes cristallins n'étant pas pris en compte dans la masse totale des sources des éléments tétravalents et trivalents.

13. Procédé selon l'une des revendications précédentes dans lequel l'étape i) comprend une étape de mûrissement du mélange réactionnel à une température comprise entre 20 et 100°C, avec ou sans agitation, pendant une durée comprise entre 30 minutes et 48 heures.

14. Procédé selon l'une des revendications 1 à 13 dans lequel le traitement hydrothermal de l'étape ii) est réalisé sous pression autogène à une température comprise entre 120°C et 220°C, de préférence entre 150°C et 195°C, pendant une durée comprise entre 12 heures et 15 jours, de préférence entre 12 heures et 12 jours, de manière encore plus préférée entre 12 heures et 8 jours.

15. Procédé selon l'une des revendications précédentes dans lequel la phase solide obtenue à l'issue de l'étape ii) est filtrée, lavée, et séchée à une température comprise entre 20 et 150°C, de préférence entre 60 et 100°C, pendant une durée comprise entre 5 et 24 heures pour obtenir une zéolithe séchée.

16. Procédé selon la revendication 15 dans lequel la zéolithe séchée est ensuite calcinée à une température comprise entre 450 et 700°C pendant une durée comprise entre 2 et 20 heures, la calcination pouvant être précédée d'une montée en température progressive.

## Patentansprüche

1. Verfahren zur Herstellung eines Zeoliths vom AFX-Strukturtyp, das mindestens die folgenden Schritte umfasst:
i) Mischen eines Zeoliths vom FAU-Strukturtyp mit einem SiO_{2(FAU)}/Al₂O_{3(FAU)}-Molverhältnis zwischen 2,00 (Grenze eingeschlossen) und 6,00 (Grenze ausgeschlossen), einer organischen Stickstoffverbindung R, wobei R aus 1,5-Bis(methylpiperidinium)pentandihydroxid, 1,6-Bis(methylpiperidinium)hexandihydroxid oder 1,7-Bis(methylpiperidinium)heptandihydroxid ausgewählt wird, mindestens einer Quelle von mindestens einem Alkali- und/oder Erdalkalimetall M mit der Wertigkeit n, wobei n für eine ganze Zahl größer oder gleich 1 steht, in wässrigem Medium, wobei M für Natrium steht und es sich bei der Quelle von mindestens einem Alkali- und/oder Erdalkalimetall M um Natriumhydroxid handelt, gegebenenfalls in Gegenwart einer zusätzlichen Zufuhr von mindestens einer Quelle mindestens eines vierwertigen Elements XO₂ und/oder mindestens einer Quelle mindestens eines dreiwertigen Elements Y₂O₃ in der Mischung,
wobei die Reaktionsmischung die folgende molare Zusammensetzung aufweist:
(SiO_{2(FAU)})/(Al₂O_{3(FAU)}) zwischen 2,00 (Grenze eingeschlossen) und 6,00 (Grenze ausgeschlossen), vorzugsweise zwischen 3,00 (Grenze eingeschlossen) und 6,00 (Grenze ausgeschlossen),
H₂O/(SiO_{2(FAU)}) zwischen 1 und 100, vorzugsweise zwischen 5 und 60,
R/(SiO_{2(FAU)}) zwischen 0,01 und 0,6, vorzugsweise zwischen 0,05 und 0,5,
M_{2/n}O/(SiO_{2(FAU)}) zwischen 0,005 und 0,7, vorzugsweise zwischen 0,05 und 0,6, Grenzen eingeschlossen,
wobei SiO_{2(FAU)} die von dem FAU-Zeolith bereitgestellte Menge von SiO₂ bedeutet und Al₂O_{3(FAU)} die von dem FAU-Zeolith bereitgestellte Menge von Al₂O₃ bedeutet, bis zum Erhalt eines homogenen Vorläufergels mit einem Molverhältnis der als Oxide von vierwertigen Elementen ausgedrückten Gesamtmenge zu der als Oxide von dreiwertigen Elementen ausgedrückten Gesamtmenge zwischen 2 und 80;
ii) hydrothermale Behandlung des am Ende von Schritt i) erhaltenen Vorläufergels bei einer Temperatur zwischen 120 °C und 220 °C über einen Zeitraum zwischen 12 Stunden und 15 Tagen.

2. Verfahren nach dem vorhergehenden Anspruch, wobei es sich bei R um 1,6-Bis(methylpiperidinium)hexandihydroxid handelt.

3. Verfahren nach einem der vorhergehenden Ansprüche, wobei die Reaktionsmischung von Schritt i) mindestens eine zusätzliche Quelle eines Oxids XO₂ umfasst, wobei X für ein oder mehrere vierwertige Elemente steht, die aus der aus den folgenden Elementen gebildeten Gruppe ausgewählt sind: Silicium, Germanium, Titan, so dass das XO₂/SiO_{2(FAU)}-Molverhältnis zwischen 0,1 und 33 und vorzugsweise zwischen 0,1 und 15, Grenzen eingeschlossen, liegt, wobei der Gehalt an SiO_{2(FAU)} in dem Verhältnis der von dem Zeolith vom FAU-Strukturtyp bereitgestellte Gehalt ist.

4. Verfahren nach Anspruch 3, wobei die Reaktionsmischung von Schritt i) die folgende molare Zusammensetzung aufweist:
(XO₂ + SiO_{2 (FAU)})/Al₂O_{3 (FAU)} zwischen 2 und 200, vorzugsweise zwischen 4 und 95,
H₂O/(XO₂ + SiO_{2(FAU)}) zwischen 1 und 100, vorzugsweise zwischen 5 und 60,
R/(XO₂ + SiO_{2(FAU)}) zwischen 0,01 und 0,6, vorzugsweise zwischen 0,05 und 0,5,
M_{2/n}O/(XO₂ + SiO_{2 (FAU)}) zwischen 0,005 und 0,7, vorzugsweise zwischen 0,05 und 0,6, Grenzen eingeschlossen.

5. Verfahren nach einem der Ansprüche 3 bis 4, wobei X für Silicium steht.

6. Verfahren nach einem der vorhergehenden Ansprüche, wobei die Reaktionsmischung von Schritt i) mindestens eine zusätzliche Quelle eines Oxids Y₂O₃ umfasst, wobei Y für ein oder mehrere dreiwertige Elemente steht, die aus der aus den folgenden Elementen gebildeten Gruppe ausgewählt sind: Aluminium, Bor, Gallium, so dass das Y₂O₃/Al₂O_{3(FAU)}-Molverhältnis zwischen 0,001 und 2 und vorzugsweise zwischen 0,001 und 1,8, Grenzen eingeschlossen, liegt, wobei der Gehalt an Al₂O_{3(FAU)} in dem Verhältnis der von dem Zeolith vom FAU-Strukturtyp bereitgestellte Gehalt ist.

7. Verfahren nach Anspruch 6, wobei die Reaktionsmischung von Schritt i) die folgende molare Zusammensetzung aufweist:
SiO_{2 (FAU)}/(Al₂O_{3 (FAU)} + Y₂O₃) zwischen 2,00 (Grenze eingeschlossen) und 6,00 (Grenze ausgeschlossen), vorzugsweise zwischen 3,00 (Grenze eingeschlossen) und 6,00 (Grenze ausgeschlossen),
H₂O/(SiO_{2(FAU)}) zwischen 1 und 100, vorzugsweise zwischen 5 und 60,
R/(SiO_{2(FAU)}) zwischen 0,01 und 0,6, vorzugsweise zwischen 0,05 und 0,5,
M_{2/n}O/(SiO_{2(FAU)}) zwischen 0,005 und 0,7, vorzugsweise zwischen 0,05 und 0,6, Grenzen eingeschlossen,
wobei SiO_{2(FAU)} die von dem FAU-Zeolith bereitgestellte Menge von SiO₂ bedeutet und Al₂O_{3(FAU)} die von dem FAU-Zeolith bereitgestellte Menge von Al₂O₃ bedeutet.

8. Verfahren nach einem der Ansprüche 6 bis 7, wobei Y für Aluminium steht.

9. Verfahren nach einem der vorhergehenden Ansprüche, wobei die Reaktionsmischung von Schritt i) Folgendes enthält:
- mindestens eine zusätzliche Quelle eines Oxids XO₂
- und mindestens eine zusätzliche Quelle eines Oxids Y₂O₃,
wobei der FAU-Zeolith zwischen 5 und 95 Massen-%, vorzugsweise zwischen 50 und 95 Massen-%, besonders bevorzugt zwischen 60 und 90 Massen-% und noch weiter bevorzugt zwischen 65 und 85 Massen-% eines Zeoliths vom FAU-Strukturtyp, bezogen auf die Gesamtmenge der Quellen von dreiwertigen und vierwertigen Elementen SiO_{2(FAU)}, XO₂, Al₂O_{3(FAU)} und Y₂O₃ der Reaktionsmischung, ausmacht und die Reaktionsmischung die folgende molare Zusammensetzung aufweist:
(XO₂ + SiO_{2(FAU)})/(Al₂O_{3(FAU)} + Y₂O₃) zwischen 2 und 200, vorzugsweise zwischen 6 und 95,
H₂O/(XO₂ + SiO_{2(FAU)}) zwischen 1 und 100, vorzugsweise zwischen 5 und 60,
R/(XO₂ + SiO_{2(FAU)}) zwischen 0,01 und 0,6, vorzugsweise zwischen 0,05 und 0,5,
M_{2/n}O/(XO₂ + SiO_{2(FAU)}) zwischen 0,005 und 0,7, vorzugsweise zwischen 0,05 und 0,6, Grenzen eingeschlossen.

10. Verfahren nach einem der vorhergehenden Ansprüche, wobei das am Ende von Schritt i) erhaltene Vorläufergel ein Molverhältnis der als Oxide von vierwertigen Elementen ausgedrückten Gesamtmenge zu der als Oxide von dreiwertigen Elementen ausgedrückten Gesamtmenge zwischen 2 und 80, Grenzen eingeschlossen, aufweist.

11. Verfahren nach einem der vorhergehenden Ansprüche, wobei der Zeolith vom FAU-Strukturtyp ein SiO_{2(FAU)}/Al₂O_{3(FAU)}-Molverhältnis zwischen 3,00 (Grenze eingeschlossen) und 6,00 (Grenze ausgeschlossen), vorzugsweise ein SiO_{2(FAU)}/Al₂O_{3(FAU)}-Molverhältnis zwischen 4,00 (Grenze eingeschlossen) und 6,00 (Grenze ausgeschlossen) aufweist.

12. Verfahren nach einem der vorhergehenden Ansprüche, bei dem man Kristallkeime eines Zeoliths vom AFX-Strukturtyp zu der Reaktionsmischung von Schritt i) gibt, vorzugsweise in einer Menge zwischen 0,01 und 10 % der Gesamtmasse der Quellen der vierwertigen und dreiwertigen Elemente in wasserfreier Form, die in der Reaktionsmischung vorliegen, wobei die Kristallkeime in der Gesamtmasse der Quellen der vierwertigen und dreiwertigen Elemente nicht berücksichtigt werden.

13. Verfahren nach einem der vorhergehenden Ansprüche, wobei der Schritt i) einen Schritt der Reifung der Reaktionsmischung bei einer Temperatur zwischen 20 und 100 °C mit oder ohne Rühren über einen Zeitraum zwischen 30 Minuten und 48 Stunden umfasst.

14. Verfahren nach einem der Ansprüche 1 bis 13, wobei die hydrothermale Behandlung von Schritt ii) unter autogenem Druck bei einer Temperatur zwischen 120 °C und 220 °C, vorzugsweise zwischen 150 °C und 195 °C, über einen Zeitraum zwischen 12 Stunden und 15 Tagen, vorzugsweise zwischen 12 Stunden und 12 Tagen, noch weiter bevorzugt zwischen 12 Stunden und 8 Tagen durchgeführt wird.

15. Verfahren nach einem der vorhergehenden Ansprüche, wobei die am Ende von Schritt ii) erhaltene feste Phase abfiltriert, gewaschen und bei einer Temperatur zwischen 20 und 150 °C, vorzugsweise zwischen 60 und 100 °C, über einen Zeitraum zwischen 5 und 24 Stunden getrocknet wird, was einen getrockneten Zeolith ergibt.

16. Verfahren nach Anspruch 15, wobei der getrocknete Zeolith dann bei einer Temperatur zwischen 450 und 700 °C über einen Zeitraum zwischen 2 und 20 Stunden calciniert wird, wobei der Calcinierung eine allmähliche Temperatursteigerung vorgeschaltet sein kann.

## Claims

1. Process for the preparation of a zeolite of AFX structural type comprising at least the following stages:
i) the mixing, in an aqueous medium, of a zeolite of FAU structural type, having an SiO_{2 (FAU)}/Al₂O_{3 (FAU)} molar ratio of between 2.00 (limit included) and 6.00 (limit excluded), of a nitrogenous organic compound R, R being chosen from 1,5-bis(methylpiperidinium)pentane dihydroxide, 1,6-bis(methylpiperidinium)hexane dihydroxide or 1,7-bis(methylpiperidinium)heptane dihydroxide, of at least one source of at least one alkali and/or alkaline earth metal M of valency n, n being an integer greater than or equal to 1, M being sodium and the source of at least one alkali and/or alkaline earth metal M is sodium hydroxide, in the presence or not, of an additional supply, within said mixture, of at least one source of at least one tetravalent element XO₂, and/or of at least one source of at least one trivalent element Y₂O₃,
the reaction mixture exhibiting the following molar composition:
(SiO_{2 (FAU)})/(Al₂O_{3 (FAU)}) of between 2.00 (limit included) and 6.00 (limit excluded), preferably between 3.00 (limit included) and 6.00 (limit excluded),
H₂O/(SiO_{2 (FAU)}) of between 1 and 100, preferably between 5 and 60,
R/(SiO_{2 (FAU)}) of between 0.01 and 0.6, preferably between 0.05 and 0.5,
M_{2/n}O/(SiO_{2 (FAU)}) of between 0.005 and 0.7, preferably between 0.05 and 0.6, limits included,
in which SiO_{2 (FAU)} denotes the amount of SiO₂ contributed by the FAU zeolite and Al₂O_{3 (FAU)} denotes the amount of Al₂O₃ contributed by the FAU zeolite, until a homogeneous precursor gel exhibiting a molar ratio of the total amount, expressed as oxides, of tetravalent elements to the total amount, expressed as oxides, of trivalent elements of between 2 and 80 is obtained;
ii) the hydrothermal treatment of said precursor gel obtained on conclusion of stage i) at a temperature of between 120°C and 220°C, for a period of time of between 12 hours and 15 days.

2. Process according to the preceding claim, in which R is 1,6-bis(methylpiperidinium)hexane dihydroxide.

3. Process according to either of the preceding claims, in which the reaction mixture of stage i) comprises at least one additional source of an oxide XO₂, X being one or more tetravalent element(s) chosen from the group formed by the following elements: silicon, germanium and titanium, so that the XO₂/SiO_{2 (FAU)} molar ratio is of between 0.1 and 33, and preferably between 0.1 and 15, limits included, the content of SiO_{2 (FAU)} in said ratio being the content contributed by the zeolite of FAU structural type.

4. Process according to Claim 3, in which the reaction mixture of stage i) has the following molar composition:
(XO₂ + SiO_{2 (FAU)})/Al₂O_{3 (FAU)} of between 2 and 200, preferably between 4 and 95,
H₂O/(XO₂ + SiO_{2(FAU)}) of between 1 and 100, preferably between 5 and 60,
R/(XO₂ + SiO_{2 (FAU)}) of between 0.01 and 0.6, preferably between 0.05 and 0.5,
M_{2/n}O/(XO₂ + SiO_{2 (FAU)}) of between 0.005 and 0.7, preferably between 0.05 and 0.6, limits included.

5. Process according to either of Claims 3 and 4, in which X is silicon.

6. Process according to one of the preceding claims, in which the reaction mixture of stage i) comprises at least one additional source of an oxide Y₂O₃, Y being one or more trivalent element(s) chosen from the group formed by the following elements: aluminium, boron and gallium, so that the Y₂O₃/Al₂O_{3 (FAU)} molar ratio is of between 0.001 and 2, and preferably between 0.001 and 1.8, limits included, the content of Al₂O_{3 (FAU)} in said ratio being the content contributed by the zeolite of FAU structural type.

7. Process according to Claim 6, in which the reaction mixture of stage i) has the following molar composition:
SiO_{2 (FAU)}/(Al₂O_{3 (FAU)} + Y₂O₃) of between 2.00 (limit included) and 6.00 (limit excluded), preferably between 3.00 (limit included) and 6.00 (limit excluded),
H₂O/(SiO_{2 (FAU)}) of between 1 and 100, preferably between 5 and 60,
R/(SiO_{2 (FAU)}) of between 0.01 and 0.6, preferably between 0.05 and 0.5,
M_{2/n}O/(SiO_{2 (FAU)}) of between 0.005 and 0.7, preferably between 0.05 and 0.6, limits included,
SiO_{2 (FAU)} being the amount of SiO₂ contributed by the FAU zeolite and Al₂O_{3 (FAU)} being the amount of Al₂O₃ contributed by the FAU zeolite.

8. Process according to either of Claims 6 and 7, in which Y is aluminium.

9. Process according to one of the preceding claims, in which the reaction mixture of stage i) contains:
- at least one additional source of an oxide XO₂,
- and at least one additional source of an oxide Y₂O₃,
the FAU zeolite representing between 5% and 95% by weight, preferably between 50% and 95% by weight, very preferably between 60% and 90% by weight and more preferably still between 65% and 85% by weight of a zeolite of FAU structural type, with respect to the total amount of the sources of the trivalent and tetravalent elements SiO_{2 (FAU)}, XO₂, Al₂O_{3 (FAU)} and Y₂O₃ of the reaction mixture, and the reaction mixture exhibiting the following molar composition:
(XO₂ + SiO_{2 (FAU)})/(Al₂O_{3 (FAU)} + Y₂O₃) of between 2 and 200, preferably between 6 and 95,
H₂O/(XO₂ + SiO_{2(FAU)}) of between 1 and 100, preferably between 5 and 60,
R/(XO₂ + SiO_{2 (FAU)}) of between 0.01 and 0.6, preferably between 0.05 and 0.5,
M_{2/n}O/(XO₂ + SiO_{2 (FAU)}) of between 0.005 and 0.7, preferably between 0.05 and 0.6,
limits included.

10. Process according to one of the preceding claims, in which the precursor gel obtained on conclusion of stage i) exhibits a molar ratio of the total amount, expressed as oxides, of tetravalent elements to the total amount, expressed as oxides, of trivalent elements of between 2 and 80, limits included.

11. Process according to one of the preceding claims, in which the zeolite of FAU structural type has an SiO_{2 (FAU)}/Al₂O_{3 (FAU)} molar ratio of between 3.00 (limit included) and 6.00 (limit excluded), preferably an SiO_{2 (FAU)}/Al₂O_{3 (FAU)} molar ratio of between 4.00 (limit included) and 6.00 (limit excluded).

12. Process according to one of the preceding claims, in which crystalline seeds of a zeolite of AFX structural type are added to the reaction mixture of stage i), preferably in an amount of between 0.01% and 10% of the total weight of the sources of said tetravalent and trivalent element(s) in anhydrous form present in the reaction mixture, said crystalline seeds not being taken into account in the total weight of the sources of the tetravalent and trivalent elements.

13. Process according to one of the preceding claims, in which stage i) comprises a stage of maturing of the reaction mixture at a temperature of between 20°C and 100°C, with or without stirring, for a period of time of between 30 minutes and 48 hours.

14. Process according to one of Claims 1 to 13, in which the hydrothermal treatment of stage ii) is carried out under autogenous pressure at a temperature of between 120°C and 220°C, preferably between 150°C and 195°C, for a period of time of between 12 hours and 15 days, preferably between 12 hours and 12 days, more preferably still between 12 hours and 8 days.

15. Process according to one of the preceding claims, in which the solid phase obtained on conclusion of stage ii) is filtered, washed and dried at a temperature of between 20°C and 150°C, preferably between 60°C and 100°C, for a period of time of between 5 and 24 hours, in order to obtain a dried zeolite.

16. Process according to Claim 15, in which the dried zeolite is subsequently calcined at a temperature of between 450°C and 700°C for a period of time of between 2 and 20 hours, it being possible for the calcination to be preceded by a gradual rise in temperature.
